# EUROPÄISCHE PATENTSCHRIFT

(11) **EP 1 827 897 B1**
(45) Veröffentlichungstag und Bekanntmachung des Hinweises auf die Patenterteilung: **04.05.2011**
(21) Anmeldenummer: 05850357.4
(22) Anmeldetag: 23.12.2005
(51) Int. Cl.: B60N 2/44, B60N 2/66, B60N 2/64, B60N 2/56, A47C 7/74, A47C 7/46

(54) **SITZELEMENT UND SITZSYSTEM**
SEAT ELEMENT AND SEAT SYSTEM
ELEMENT DE SIEGE ET SYSTEME DE SIEGE

(30) Priorität: 23.12.2004 DE 102004062219
(43) Veröffentlichungstag der Anmeldung: 05.09.2007
(73) Patentinhaber: Schukra Gerätebau AG, 2560 Berndorf (AT)
(72) Erfinder: PETZEL, Jan, 72074 Tübingen (DE); PREISS, Thomas, 67678 Mehlingen (DE); STOESSEL, Veit, 90409 Nürnberg (DE); SWAN, David Anthony, Windsor, Ontario N8P 1K8 (CA); COLJA, Renato, Windsor, Ontario N9G 2G7 (CA)
(74) Vertreter: Banzer, Hans-Jörg
(86) Internationale Anmeldenummer: PCT/EP2005/014015
(87) Internationale Veröffentlichungsnummer: WO 2006/069764

(56) Entgegenhaltungen:
- EP-A- 1 447 070
- FR-A- 2 816 261
- FR-A- 2 823 475

## Beschreibung

Die vorliegende Erfindung betrifft ein Sitzelement und ein das Sitzelement umfassendes Sitzsystem. Insbesondere betrifft sie ein Sitzelement und ein Sitzsystem für Fahrzeugsitze, insbesondere in einem Kraftfahrzeug.

Fahrzeugsitze moderner Kraftfahrzeuge können eine Vielzahl von verschiedenen Komforteinrichtungen beinhalten. Bekannte Beispiele hierfür sind Sitzheizungen, Wölbmechaniken zur Verstellung der Krümmung bzw. Wölbung einer Sitzlehne insbesondere im Lordosenbereich, wie sie beispielsweise aus der EP 0 485 483 B1 bekannt sind, oder Massageeinrichtungen.

Kraftfahrzeuge eines Fahrzeugtyps sind im Allgemeinen in verschiedenen Ausstattungen erhältlich. Dabei können insbesondere die vorstehend genannten Komfortelemente in Sitzen in verschiedenen Ausführungen vorhanden sein oder auch weggelassen werden. Hierfür sind in dem jeweiligen Sitz je nach Ausstattung verschiedene Verdrahtungen, Aufhängungen und dergleichen nötig. Daher ist es relativ aufwändig, für jede Ausstattung den entsprechenden Fahrzeugsitz bereitzustellen. Zudem ist auch das nachträgliche Hinzufügen von Komfortelementen schwierig, da gegebenenfalls der bestehende Sitz nicht die für ein bestimmtes Komfortelement nötigen Voraussetzungen bietet.

Aus der EP 1 447 070 A ist ein Sitzelement gemäß dem Oberbegriff des Anspruchs 1 bekannt. Ein ähnliches Sitzelement ist auch in der FR 2816261 A offenbart.

Es ist daher eine Aufgabe der vorliegenden Erfindung, ein Sitzelement und ein entsprechendes Sitzsystem bereitzustellen, bei welchem einzelne Funktionen, insbesondere Komfortfunktionen, auf einfache Weise hinzugefügt werden können.

Diese Aufgabe wird gelöst durch ein Sitzelement nach Anspruch 1. Die abhängigen Ansprüche definieren vorteilhafte oder bevorzugte Ausführungsbeispiele des Sitzelements sowie ein das Sitzelement umfassendes Sitzsystem.

Erfindungsgemäß wird ein Sitzelement zum Einbau in einen Sitz bereitgestellt, wobei das Sitzelement derart dimensioniert ist, dass es sich in einem eingebauten Zustand über im Wesentlichen einen gesamten Bereich einer Sitzlehne des Sitzes und/oder einer Sitzfläche des Sitzes erstreckt. Erfindungsgemäß weist das Sitzelement Aufnahmen zur Aufnahme von Funktionselementen zum Bereitstellen zusätzlicher Sitzfunktionen auf. Indem ein derartiges Sitzelement bereitgestellt wird, welches sich über einen gesamten Bereich einer Sitzlehne und/oder einer Sitzfläche erstreckt und welches entsprechende Aufnahmen zur Aufnahme von Funktionselementen aufweist, können Funktionselemente an gewünschten Stellen des Sitzes auf einfache Weise hinzugefügt werden.

Das Sitzelement kann dabei insbesondere im Wesentlichen der Kontur eines sitzenden menschlichen Körpers angepasst sein. Auf diese Weise dient das Sitzelement zur Druckverteilung. Durch die angepasste Form ist es nicht nötig, eine dicke Polsterung auf dem Sitzelement bereitzustellen. Es sind also auch dünnere Auflagen möglich. Dies spart zum einen Material, zum anderen sind beispielsweise als Massageelemente ausgestaltete Funktionselemente durch eine dünnere Auflage besser spürbar.

Das Sitzelement kann beispielsweise durch Spritzgießen eines Kunststoffes einstückig gefertigt sein. Bei Sitzelementen, welche sich sowohl über den Bereich der Sitzlehne als auch über den Bereich der Sitzfläche erstrecken, kann dabei zwischen einem Sitzlehnenabschnitt und einem Sitzflächenabschnitt ein Scharniermittel, beispielsweise ein oder mehrere Filmscharniere, angeordnet sein.

Die Aufnahmen zur Aufnahme von Funktionselementen umfassen Aufnahmen zur Aufnahme von Wölbelementen, wobei mit den Wölbelementen eine Wölbung bzw. Krümmung des Sitzelements an bestimmten Stellen, beispielsweise in einem Lendenwirbelbereich, eingestellt werden kann. Hierzu umfasst das Sitzelement an entsprechenden Stellen wölbbare, insbesondere flächige, Abschnitte, beispielsweise Platten oder aus Längs- und Querstreben bestehende Elemente. Das Wölbelement wird dann benachbart, insbesondere auf einer einem Benutzer des Sitzes abgewandten Seite, zu diesem wölbbaren Abschnitt angeordnet und kann dieses wölben bzw. krümmen. In einer einfacheren Ausstattung ist es dann beispielsweise möglich, ein feststehendes Element benachbart zu dem wölbbaren Abschnitt anzuordnen, um eine feste Krümmung vorzunehmen.

Hierzu können in dem Sitzelement weiterhin feste Führungen, beispielsweise Drähte, zur Aufnahme des Wölbelements vorhanden sein. An diesen Drähten kann das Wölbelement dann bewegt werden, um eine Wölbung des Sitzelements an einer gewünschten Stelle hervorzurufen.

Die Aufnahmen können weiterhin Aufnahmen zur Aufnahme von Heiz-, Kühl- und Ventilationselementen umfassen. Mit derartigen Elementen kann der Sitz durch das Sitzelement gekühlt bzw. aufgeheizt werden. Hierfür umfasst das Sitzmodul bevorzugt Luftkanäle, durch welche geheizte bzw. kühle Luft strömen kann. Diese Luftführungen können insbesondere auch Öffnungen zu einer Außenseite des Sitzes hin umfassen.

Da die Luftführungen bereits in dem Sitzelement vorgesehen sind, können derartige Heiz-, Kühl- oder Ventilationselemente einfach nachgerüstet oder ausgetauscht werden. Die Luftführungen können Rippen umfassen, welche gleichzeitig zur Versteifung des Sitzelementes dienen.

Die Aufnahmen können weiterhin Aufnahmen für Massageelemente umfassen. Derartige Aufnahmen für Massageelemente sind bevorzugt insbesondere in einem Schulter- und Rückenbereich angeordnet.

Ein erfindungsgemäßes Sitzsystem umfasst das oben erläuterte Sitzelement sowie eine Anzahl verschiedener Funktionselemente, welche je nach Bedarf in das Sitzelement eingesetzt werden können, um einen entsprechenden Sitz nach Wunsch auszustatten. Mit einem derartigen Sitzsystem ist ein einfaches Bereitstellen von Sitzen mit verschiedenen Ausstattungen möglich, wobei immer dasselbe Sitzelement verwendet werden kann.

Die Erfindung wird nachfolgend unter Bezugnahme auf die beigefügte Zeichnung anhand bevorzugter Ausführungsbeispiele näher erläutert. Es zeigen:
Figur 1 eine perspektivische Frontansicht eines erfindungsgemäßen Sitzelements,
Figur 2 eine Rückansicht des Sitzelements aus Figur 1, und
Figur 3 eine perspektivische Rückansicht des Sitzelements aus Figur 1 mit zusätzlichen Funktionselementen.

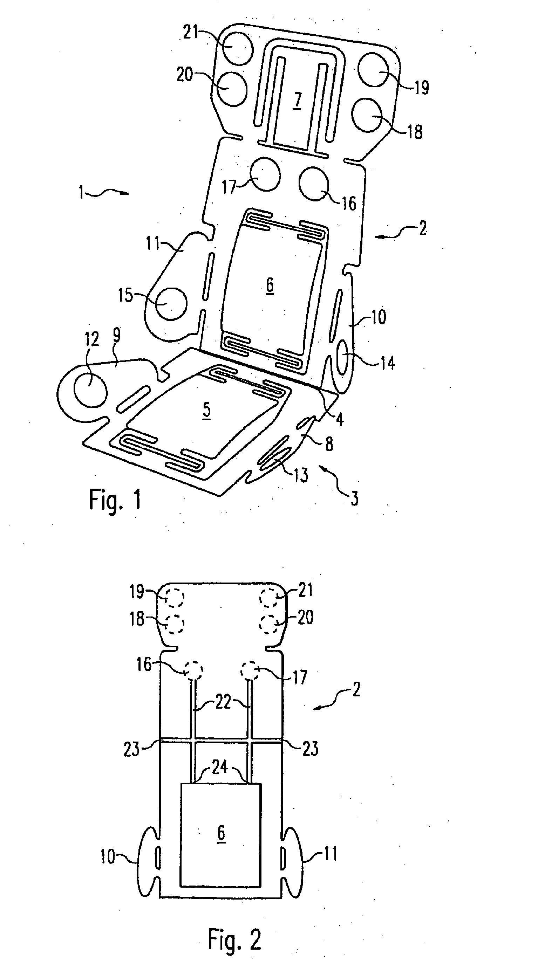

In Figur 1 ist eine perspektivische Frontansicht eines erfindungsgemäßen Sitzelements dargestellt, welches als Grundmodul eines im Folgenden näher beschriebenen erfindungsgemäßes Sitzsystems dient. Das Sitzelement 1 umfasst einen Lehnenabschnitt 2 und einen Sitzabschnitt 3, welche durch ein Scharnier 4 verbunden sind. Das Sitzelement 1 ist bevorzugt beispielsweise durch Spritzgießen aus einem Kunststoff gefertigt. In diesem Fall ist das Scharnier 4 bevorzugt ein Filmscharnier oder eine Abfolge von mehreren Filmscharnieren, um einen Neigungswinkel des Lehnenabschnitts 2 relativ zu dem Sitzabschnitt 3 einstellen zu können. Es ist aber ebenso möglich, den Lehnenabschnitt 2 und den Sitzabschnitt 3 als getrennte Teile zu fertigen. In diesem Fall ist es nicht nötig, den Lehnenabschnitt 2 und den Sitzabschnitt 3 durch ein Scharnier zu verbinden, sie können vielmehr auch getrennt in entsprechende Abschnitte eines Sitzes eingebaut werden. Wird die Funktionalität des erfindungsgemäßen Sitzelements nur in der Lehne oder in der Sitzfläche eines Sitzes benötigt, muss selbstverständlich nur der entsprechende Abschnitt bereitgestellt werden.

Das Sitzelement 1 ist dabei zum Einbau in einen Sitz bestimmt und ist so geformt, dass es eine Stütze für einen auf dem jeweiligen Sitz sitzenden Fahrzeuginsassen bietet, d. h. das Sitzelement ist der Form eines sitzenden Körpers ergonomisch angepasst. Hierzu ist insbesondere in einem Lendenbereich eine Lendenwölbplatte 6, in einem Schulter/Nackenbereich eine Schulterwölbplatte 7 und in dem Sitzabschnitt 3 eine Sitzwölbplatte 5 vorgesehen. In den verschiedenen Bereichen bzw. Abschnitten des Sitzes kann auch jeweils mehr als eine Wölbplatte vorgesehen sein, z.B. zwei oder mehr Sitzwölbplatten, oder einzelne Wölbplatten können entfallen. Durch diese Wölbplatten können die entsprechenden Körperpartien passend unterstützt werden. Wie im Folgenden näher erläutert werden wird, können die Wölbplatten 5-7 auch mit entsprechenden Verstellmechanismen gekoppelt werden, so dass die Wölbung verstellbar ist. Selbstverständlich können je nach Bedarf sowohl in dem Lehnenabschnitt 2 als auch in dem Sitzabschnitt 3 mehr oder weniger Wölbplatten als in Fig. 1 beispielhaft dargestellt vorgesehen sein, beispielsweise kann auch eine Wölbplatte in einem Brustbereich vorgesehen sein.

Das Sitzelement 1 weist weiterhin an dem Lehnenabschnitt 2 Seitenwangen 10, 11 und an dem Sitzabschnitt 3 Seitenwangen 8, 9 auf. Diese Seitenwangen geben einem auf dem Sitz sitzenden Insassen eine seitliche Stabilität. Derartige Seitenwangen sind prinzipiell aus so genannten Sportsitzen bekannt, können aber auch bei anderen Sitzen vorgesehen werden.

Das Sitzelement 1 weist weiterhin eine Mehrzahl von Aufnahmen 12-21 auf, in welchen verschiedene Funktions- bzw. Komfortelemente aufgenommen werden können. Derartige Funktionselemente können beispielsweise Massageelemente, Ventilatoren, Heizelemente und dergleichen umfassen. Mit Heizelementen und Ventilatoren kann beispielsweise Luft aufgeheizt und in dem Sitz verteilt werden, um einen Insassen somit zu wärmen. Auf der anderen Seite kann auch kühle Luft entweder aus der Umgebung angesaugt werden oder durch Kühlelemente gekühlt werden, um den Insassen zu kühlen. Durch Massageelemente kann schließlich ein Benutzer massiert werden, um Muskulatur, welche während des Autofahrens zu Verkrampfungen neigt, zu entspannen. Dies ist insbesondere im Bereich der Schultern der Fall, so dass beispielsweise in Aufnahmen 18 und 20 derartige Massageelemente untergebracht werden können. Die Funktion der Massageelemente kann dann beispielsweise mit der oben erwähnten Wärmezufuhr gekoppelt sein, so dass eine Massage gleichzeitig mit einer Wärmezufuhr erfolgt. Die Wärmezufuhr wird dabei bevorzugt in Abhängigkeit von der Temperatur im Fahrzeug und/oder der Außentemperatur eingestellt oder manuell geregelt. Die Aufnahmen 12-21 können entweder universell ausgestaltet sein, so dass verschiedene Arten von Funktionselementen aufgenommen werden können, oder für bestimmte Funktionselemente ausgelegt sein.

Weitere Funktionselemente umfassen beispielsweise Elemente, welche zum Verändern der Dicke bzw. Position der Seitenwangen 8-11 in die Aufnahmen 12-15 eingesetzt werden können. Durch derartige Elemente können sich die Seitenwangen an den jeweiligen Insassen anpassen, wobei beispielsweise zum Ein- und Aussteigen aus dem Fahrzeug die Seitenwangen abgeflacht werden können, um das Ein- bzw. Aussteigen zu erleichtern. Derartige Elemente zur Verstellung der Seitenwangen können beispielsweise durch aufblasbare Gassäcke realisiert sein.

Zudem ist es möglich, die Verbindung der Seitenwangen 8-11 mit dem Sitzabschnitt 3 bzw. dem Lehnenabschnitt 2 scharniermäßig auszugestalten, so dass die Seitenwangen 8-11 durch eine Klappbewegung verstellt werden können.

Wie bereits beschrieben können in die Aufnahmen 12-21 unter anderem Ventilatoren, Heizelemente oder Kühlelemente aufgenommen werden, wobei zwei oder drei dieser Funktionen auch in einem einzigen Modul kombiniert sein können, beispielsweise in Form von kombinierten Ventilations-/Heizelementen. Um die Luft entsprechend in dem Sitzelement zu den gewünschten Stellen zu leiten, sind bevorzugt in dem Sitzelement 1 Luftleitungen bzw. Luftführungen vorgesehen. Dies ist beispielhaft in Figur 2 gezeigt, welche eine Rückansicht des Lehnenabschnitts 2 aus Figur 1 zeigt. Dabei wird beispielhaft angenommen, dass in die Aufnahmen 16 und 17 derartige Ventilationselemente aufgenommen werden können. Wie in Figur 2 gezeigt, sind Luftführungen 22 vorgesehen, welche sich ausgehend von den Aufnahmen 16 und 17 erstrecken und in Mündungen 24 an der Lendenwölbplatte 16 enden. Durch eine weitere quer zu den Luftführungen 22 verlaufende Luftführung kann Luft auch zu Öffnungen 23 gelenkt werden, welche seitlich an dem Sitzelement 2 liegen. Die Luftführungen 22 können beispielsweise als Kanäle oder Bohrungen in dem Sitzelement 2 ausgelegt sein. Bevorzugt werden sie jedoch durch parallel verlaufende Rippen gebildet, welche gleichzeitig zur Versteifung des Sitzelements 1 bzw. des Lehnenabschnitts 2 dienen.

Sind nun in den Aufnahmen 16 und 17 Ventilationseinheiten angeordnet, kann Luft über die Öffnungen 24 zu der Lendenwölbplatte 6 gelenkt werden, um somit den unteren Rücken des Insassens zu kühlen bzw. - bei einem entsprechenden Heizelement - zu erwärmen. Zudem kann über die Öffnungen 23 in diesem Fall erwärmte Luft nach außen gelenkt werden, um den Insassen auch seitlich zu wärmen. Dies ist insbesondere bei modernen Motoren wie beispielsweise Dieselmotoren vorteilhaft, welche hinsichtlich des Kraftstoffverbrauchs so optimiert sind, dass sie sich nur sehr langsam erwärmen, was bewirkt, dass eine konventionelle Heizung des Fahrzeuges erst nach längerer Zeit warme Luft liefert. Durch ein in dem Sitzelement 1 angeordnetes Heizelement kann sehr schnell warme Luft erzeugt werden und über die Öffnungen 23 den Insassen wärmen.

Die in Figur 2 gezeigte Anordnung der Luftführungen ist lediglich beispielhaft zu verstehen. Es können noch wesentlich mehr Luftführungen auch in dem Sitzelement 3 vorgesehen sein, und die Luftführungen können von anderen der Aufnahmen 12-21 ausgehen, so dass auch in diesen anderen Aufnahmen entsprechende Ventilationselemente, Heizelemente oder Kühlelemente angeordnet werden können. Zusätzlich sind bevorzugt auch Luftführungen zum Ansaugen von Luft vorgesehen, beispielsweise von Orten unterhalb des Sitzes, da es dort im Allgemeinen relativ kühl ist.

Dabei können ein dem Sitzelement 1 auch passive Pumpelemente vorgesehen sein, welche durch Bewegungen eines Insassen auf dem Sitz derart aktivierte werden, dass Luft zur Belüftung des Sitzes durch die Luftführungen 22 gepumpt wird. Somit ist eine Belüftung auch ohne elektrisch betriebene Ventilatoren möglich.

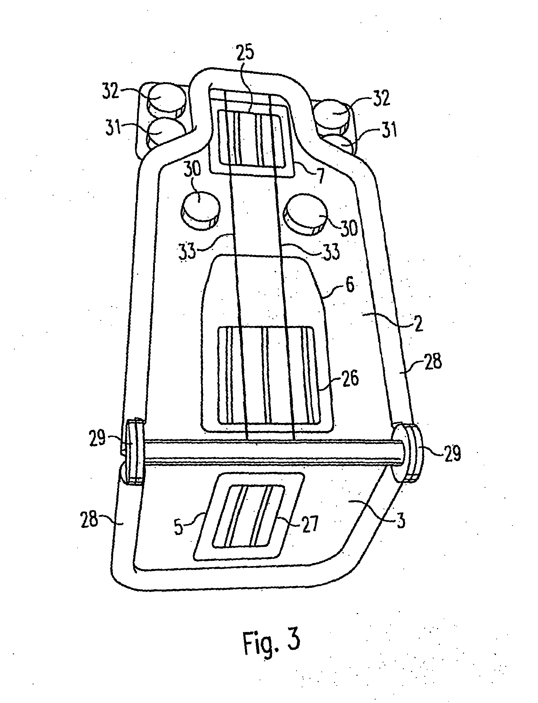

In Figur 3 ist eine perspektivische Rückansicht des Sitzelements 1 aus Figur 1 in einem Zustand gezeigt, in welchem es an einem Sitzrahmen 28 befestigt ist. Zudem sind in Figur 3 Funktionselemente in die Aufnahmen 16-21 eingebaut, zur Vereinfachung sind die Seitenwangen 8-11 sowie die Lufiführungen aus Fig. 2 nicht dargestellt.

Der Sitzrahmen 28 wird dabei durch einen Lehnenabschnitt und einen Sitzabschnitt gebildet, welche jeweils ein Rohr umfassen, welches im Wesentlichen entlang des Umrisses des Sitzes verläuft. Der Lehnenabschnitt und der Sitzabschnitt des Sitzrahmens 28 sind durch Gelenke 29 verbunden, um eine Einstellung eines Neigungswinkels der Sitzlehne relativ zu der Sitzfläche des Sitzes zu ermöglichen. Das Sitzelement 1 ist in Figur 3 durch (nicht dargestellte) Befestigungsmittel an dem Sitzrahmen 28 befestigt. Hierzu kann jegliche Art von bekannten Befestigungsmitteln wie Klammern, Schrauben oder Klipse Verwendung finden. Das Sitzelement 1 kann hierzu auch so ausgestaltet sein, dass es den Sitzrahmen 28 ganz oder teilweise umgreift.

Wie in Figur 3 gezeigt, sind an dem Lehnenabschnitt 2 des Sitzelements 1 zwei im Wesentlichen parallel in vertikale Richtung gespannte Drähte 33 angebracht. Die Drähte 24 können direkt beim Spritzgießen in den Lehnenabschnitt 2 eingegossen werden oder - beispielsweise durch einklipsen - an diesem befestigt werden. Die Drähte 33 dienen wiederum als Führung und Aufnahme für Wölbelemente 25, 26, welche die Wölbung der Sitzwölbplatte 5 und der Schulterwölbplatte 7 verstellen können. Alternativ können die Wölbelemente auch, wie in Figur 3 am Beispiel eines Wölbelements 27 für die Sitzwölbplatte 5 gezeigt, in anderer Weise an dem Sitzelement 1 befestigt werden, beispielsweise durch Schrauben, Haken oder Klipse. Die Wölbelemente 25, 26, 27 können dabei beispielsweise gemäß dem in der eingangs erwähnten EP 0 485 483 arbeiten, wobei zwei entgegengesetzt liegende Enden eines Gesamtdruckelements aufeinander zu bewegt werden, um eine Wölbung des Gesamtdruckelements einzustellen. Das Gesamtdruckelement kann dabei plattenförmig oder in Form von Längs- und Querstreben ausgebildet sein. Die einstellbare Wölbung des jeweiligen Wölbelements kann dann durch Druck oder Zug auf die jeweilige Wölbplatte 5, 6, 7 übertragen werden, um eine Wölbung der jeweiligen Wölbplatte einzustellen. Durch die Verwendung der Drähte 33 oder alternativ anderer Führungselemente kann insbesondere eine vertikale Position des Wölbelements 26 entlang der Drähte 33 verstellt werden, so dass neben der Stärke der Wölbung auch eine vertikale Position der Wölbung einstellbar ist. Die zum Betätigen der Wölbelemente 25, 26, 27 nötigen Aktuatoren können direkt in die Wölbelemente integriert sein, wobei im Falle elektrischer Aktuatoren eine entsprechende Verkabelung bereits in dem Sitzelement 1 integriert sein kann, so dass beispielsweise bei einem Nachrüsten eines Sitzes mit Wölbelementen keine Verkabelung vorgenommen werden muss. Anstelle elektrischer Aktuatoren sind auch Aktuatoren denkbar, bei welchen eine Kraftübertragung beispielsweise über eine - gegebenenfalls ebenfalls in dem Sitzelement 1 vorgesehene - Welle stattfindet, welche eine von einem Insassen beispielsweise durch Betätigung eines Drehknopfs erzeugte Verstellbewegung auf das jeweilige Wölbelement überträgt. Weiterhin können auch pneumatische Wölbelemente vorgesehen sein, bei welchen eine unterschiedliche Wölbung beispielsweise durch ein Aufblasen eines Gassacks, z.B. einer Luftblase, hervorgerufen.

Zusätzlich oder alternativ zu den Drähten 33 können auch weitere Drähte entsprechender Dicke in dem Sitzelement 1 angeordnet sein, welche diesem eine gewünschte Form geben bzw. die Form stabilisieren. Auch können Drähte auch in anderer Weise benutzt werden, um das Wölbelement 26 zu führen.

Ein Vorteil des dargestellten bevorzugten Ausführungsbeispiels liegt dabei darin, dass die Wölbelemente 25, 26, 27 auf der Rückseite des Sitzes, d.h. auf der einem Benutzer des Sitzes abgewandten Seite, angeordnet sind, während bei herkömmlichen Sitzen mit verstellbaren Wölbungen entsprechende Verstellelemente üblicherweise zwischen einer starren Innenstruktur des Sitzes und einer Polsterung auf der dem Benutzer zugewandten Seite angeordnet sind. Bei dem dargestellten Ausführungsbeispiel wird der Druck auf die Sitzoberfläche, welche durch den Benutzer verursacht wird, durch das Sitzelement 1 aufgenommen und gleichmäßig verteilt. Die Wölbelemente 25, 26, 27 wirken hingegen von der abgewandten Seite auf die fest eingebauten Wölbplatten, was ebenfalls eine gleichmäßige Druckverteilung ermöglicht.

Insbesondere erfolgt somit die Verteilung des Druckes unabhängig von der Ausgestaltung des Wölbelements immer durch das Sitzelement 1, so dass die Art und Ausgestaltung der Wölbelemente verändert werden kann, ohne dass sich das Verhalten des Sitzes wesentlich ändert. Beispielsweise können die dargestellten mechanischen Wölbelemente durch die bereits erwähnten pneumatischen Wölbelemente, bei welchen beispielsweise Gassäcke bzw. Luftblasen mit Luft gefüllt werden, um eine Wölbung hervorzurufen, ersetzt werden, ohne dass sich das Verhalten des Sitzes für den Benutzer wesentlich ändert. Bei herkömmlichen pneumatischen Systemen drücken derartige Luftblasen hingegen direkt auf eine Ausschäumung bzw. Polsterung des Sitzes und können somit nur einen lokal begrenzten Druck ausüben.

In den Aufnahmen 16 und 17 aus Figur 1 sind in Figur 3 beispielhaft Ventilations/Heizelemente aufgenommen, welche bei Bedarf Luft erwärmen und zur Belüftung über die - in Figur 3 nicht dargestellten, aber in Figur 2 gezeigten - Luftführungen verteilen können. Im Schulterbereich sind in den Aufnahmen 18 und 20 beispielsweise Massageelemente 31 vorgesehen, welche eine Massage im Schulterbereich bereitstellen können. Zudem können in Aufnahmen 19 und 21 Heizelemente 32 vorgesehen sein, welche in diesem Fall lediglich eine Erwärmung ohne Luftzirkulation bewirken. Die Funktionselemente 30-32 sind dabei lediglich als Beispiel zu verstehen, es können je nach Bedarf auch andere Funktionselemente eingesetzt werden. Die für die Funktionselemente 30-32 erforderliche Verkabelung, insbesondere zur Steuerung und Stromversorgung ist bevorzugt wiederum bereits in dem Sitzelement 1 vorgesehen, so dass eine einfache Um- bzw. Nachrüstung möglich ist.

Dabei ist zu bemerken, dass auch die Wölbelemente 25, 26, 27 Massagefunktionen bereitstellen können, indem die Wölbung zeitlich verändert wird.

Somit können mit einem erfindungsgemäßen Sitzsystem mit dem als Grundmodul dienenden Sitzelement 1 und den als Erweiterungsmodule dienenden Funktionselementen 25-27 sowie 30-32 auf einfach Weise modular verschiedene Ausstattungen realisiert werden. Dabei können in einzelne Aufnahmen auch keine Funktionselemente eingebracht werden, falls dies für eine jeweilige Ausstattung nicht erforderlich ist, und es können Funktionselemente verschiedener Art und Qualität (mechanisch oder elektrisch zu betätigen, mehr oder weniger Einstellmöglichkeiten etc.) vorgesehen sein. Es ist auch denkbar, anstelle der Wölbelemente 25-27 in entsprechende Aufnahmen feste, d. h. starre Elemente einzusetzen, um eine Elastizität und Form der Wölbplatten 5-6 fest vorzugeben. Diesbezüglich ist es auch möglich, in dem Sitzelement 1 Brücken, welche angespritzt sein können, vorzusehen, um bewegliche Teile wie die Wölbplatten 5, 6, 7 zu blockieren. In Versionen eines entsprechenden Sitzes, bei welchen eine Verstellbarkeit des jeweiligen beweglichen Teils gegeben sein soll, werden diese Brücken dann z.B. durch Herausbrechen entfernt.

Auch können Aufnahmen für Funktionselemente an anderen Stellen als an den angezeigten vorgesehen sein. Sind pneumatische Verstellelemente beispielsweise als Wölbelemente oder als Einstellelemente für die Seitenwangen 8-11 aus Figur 1 vorgesehen, können auch hierfür entsprechende Luftführungen in dem Sitzelement 1 vorgesehen sein.

Das Sitzelement 1 kann mit einer herkömmlichen Sitzpolsterung kombiniert werden. Dabei kann das gesamte Sitzelement 1 auch direkt umschäumt werden, um die Polsterung zu bilden, und dann als Einheit an dem Sitzrahmen 28 angebracht werden. Die Polsterung kann jedoch auch auf andere Weise direkt oder indirekt an dem Sitzelement 1 angebracht sein. Da jedoch das Sitzelement 1 bevorzugt derart ausgestaltet ist, dass es einer Körperform gut angepasst ist und somit selbst für eine gute Druckverteilung sorgen kann, ist es auch möglich, nur eine dünne Polsterung oder eine andere Auflage, beispielsweise einen entsprechenden Filz oder eine Schaumstoffauflage, vorzusehen. Hierdurch wird zum einen Material eingespart, zum anderen kommt die Wirkung von Massageelementen besser zum Tragen.

Zu bemerken ist, das einzelne Elemente des Sitzelementes, beispielsweise Wölbplatten oder andere Strukturelemente, auch getrennt von dem übrigen Sitzelement aus anderen Materialien wie beispielsweise Drahtgeflecht gefertigt sein können. Derartige zusätzliche Merkmale können dann beispielsweise auch bewegungserzeugende Elemente wie die erwähnten Wölbelemente aufweisen. Diese getrennt gefertigten Elemente bilden dann ebenfalls einen Teil des Sitzelements.

Wie bereits erwähnt ist das Sitzelement 1 bevorzugt durch Spritzgießen aus einem Kunststoff gefertigt. Es sind jedoch auch andere Werkstoffe oder Werkstoffkombinationen denkbar, z.B. eine Drahtgeflechtmatte mit entsprechend der menschlichen Körperform konturierten Drähten und montierten oder direkt mit angespritzten Aufnahmeeinrichtungen für die weiteren Komponenten wie Wölbelemente, Ventilatoren oder dergleichen. Des Weiteren kann das Sitzelement auch weitere tragende Strukturteile des gesamten Sitzes wie beispielsweise den Sitzrahmen enthalten, welche an dem Sitzelement montiert oder durch Umspritzen befestigt werden oder in einer Kombination aus herkömmlicher Montage und Umspritzung in das Sitzelement integriert werden.

## Patentansprüche

1. Sitzelement (1) zum Einbau in einen Sitz,
wobei das Sitzelement (1) derart dimensioniert ist, dass es sich in einem in den Sitz eingebauten Zustand im Wesentlichen über einen gesamten Bereich einer Sitzlehne des Sitzes und/oder einer Sitzfläche des Sitzes erstreckt, und
wobei das Sitzelement (1) Aufnahmen (12-21, 33) zur Aufnahme von Funktionselementen (25, 26, 27, 30, 31, 32) zum Bereitstellen zusätzlicher Sitzfunktionen umfasst,
**dadurch gekennzeichnet**
**dass** das Sitzelement (1) mindestens einen wölbbaren Abschnitt (5, 6, 7) umfasst, wobei benachbart zu dem mindestens einen wölbbaren Abschnitt (5, 7, 6) eine Aufnahme (33) für ein Funktionselement zum Einstellen einer Wölbung des wölbbaren Abschnitts (5, 6, 7) angeordnet ist.

2. Sitzelement (1) nach Anspruch 1,
**dadurch gekennzeichnet**
**dass** das Sitzelement (1) eine Form aufweist, welche im Wesentlichen der Form eines sitzenden Menschen angepasst ist, um eine ergonomische Druckverteilung bereitzustellen.

3. Sitzelement (1) nach einem der vorhergehenden Ansprüche,
**dadurch** gekenntzeichnet,
dass das Sitzelement (1) aus einem Kunststoff gefertigt ist.

4. Sitzelement (1) nach einem der vorhergehenden Ansprüche,
**dadurch gekennzeichnet,**
**dass** sich das Sitzelement (1) in einem eingebauten Zustand über im Wesentlichen einen gesamten Bereich der Sitzlehne und der Sitzfläche des Sitzes erstreckt, und dass ein Lehnenabschnitt (2) des Sitzelements (1) und ein Sitzabschnitt (3) des Sitzelements (1) durch Gelenkmittel (4) verbunden sind.

5. Sitzelement (1) nach Anspruch 4,
**dadurch gekennzeichnet,**
**dass** die Gelenkmittel (4) ein Filmscharnier umfassen.

6. Sitzelement (1) nach einem der vorhergehenden Ansprüche,
**dadurch gekennzeichnet,**
**dass** der mindestens eine wölbbare Abschnitt (5, 6, 7) in einem Sitzbereich, einem Lendenbereich, einem Brustbereich und/oder einem Schulter/Nackenbereich des Sitzelements (1) angeordnet ist.

7. Sitzelement (1) nach einem der vorhergehenden Ansprüche,
**dadurch gekennzeichnet**
**dass** die Aufnahme für das Funktionselement (25, 26, 27) zum Wölben des mindestens einen wölbbaren Abschnitt (5, 6, 7) eine Führung (33) zum Führen des Funktionselements (25, 26, 27) zum Wölben des mindestens einen wölbbaren Abschnitts (6, 5, 7) umfasst.

8. Sitzelement (1) nach Anspruch 7,
**dadurch gekennzeichnet**
**dass** die Führung einen Draht (33) zum Führen des Funktionselementes (25, 26, 27) umfasst.

9. Sitzelement (1) nach einem der vorhergehenden Ansprüche,
**dadurch gekennzeichnet,**
**dass** das Sitzelement (1) mindestens eine elektrische Leitung zur Stromversorgung und/oder Steuerung von in den Aufnahmen aufnehmbaren Funktionselementen umfasst.

10. Sitzelements (1) nach einem der vorhergehenden Ansprüche,
**dadurch gekennzeichnet,**
**dass** das Sitzelement (1) mindestens eine Luftführung (22) umfasst.

11. Sitzelement (1) nach Anspruch 10,
**dadurch gekennzeichnet,**
**dass** die mindestens eine Luftführung mindeste eine der Aufnahmen (16, 17) für Funktionselemente zur Belüftung (30) mit mindestens einer Belüftungsöffnung (23, 24) verbindet.

12. Sitzelement (1) nach Anspruch 11,
**dadurch gekennzeichnet,**
**dass** die mindestens eine Belüftungsöffnung (23, 24) eine Belüftungsöffnung (23) an einer Seite des Sitzelements (1) umfasst.

13. Sitzelement (1) nach einem der Ansprüche 10 bis 12,
**dadurch gekennzeichnet,**
**dass** das Sitzelement (1) ein mit der mindestens einen Luftführung (22) gekoppeltes passives Pumpmittel umfasst, welches derart ausgestaltet ist, dass es abhängig von einer Bewegung eines Insassen auf dem Sitz Luft durch den mindestens einen Luftkanal (22) pumpt.

14. Sitzelement (1) nach einem der vorhergehenden Ansprüche,
**dadurch gekennzeichnet,**
**dass** das Sitzelement (1) Seitenwangen (8-11) umfasst.

15. Sitzelement (1) nach Anspruch 14,
**dadurch gekennzeichnet,**
**dass** die Aufnahmen Aufnahmen für Funktionselemente zum Verstellen der Seitenwangen (8-11) umfassen.

16. Sitzelement (1) nach einem der vorhergehenden Ansprüche,
**dadurch gekennzeichnet,**
**dass** das Sitzelement mit einer polsternden Auflage versehen ist.

17. Sitzelement (1) nach einem der vorhergehenden Ansprüche,
**dadurch gekennzeichnet,**
**dass** das Sitzelement bewegliche Abschnitte (5, 6, 7) und entfernbare Elemente zum Blockieren der Bewegung der beweglichen Abschnitte (5, 6, 7) umfasst.

18. Sitzsystem zum Einbau in eine Sitz, umfassend
ein Sitzelement nach einem der Ansprüche 1-17, und
eine Mehrzahl von verschiedenen Funktionselementen (25-27, 30-32),
wobei abhängig von einer vorgegebenen Ausstattung ausgewählte Funktionselemente der Mehrzahl von verschiedenen Funktionselementen in Aufnahmen (12-21, 33) des Sitzelements (1) aufnehmbar sind.

19. Sitzsystem nach Anspruch 18,
**dadurch gekennzeichnet**
**dass** die Mehrzahl von verschiedenen Funktionselementen Massageelemente (31), Heizelemente (32), Ventilationselemente (30), Kühlelemente, mechanische, elektrische und/oder pneumatische Elemente (25, 26, 27) zum Verstellen einer Wölbung eines wölbbaren Abschnitts (5, 6, 7) des Sitzelements, und/oder Elemente zum Verstellen von Seitenwangen (8, 9, 10, 11) des Sitzelements (1) umfassen.

## Claims

1. Seating element (1) for installation in a seat,
wherein the seating element (1) is dimensioned in such a way that it extends, when in a condition in which it is installed in the seat, substantially over an entire region of a seat backrest and/or of a seating surface of the seat, and
wherein the seating element (1) includes receptacles (12-21, 33) for receiving functional elements (25, 26, 27, 30, 31, 32) for making available additional seat functions, **characterised in that**
the seating element (1) includes at least one archable section (5, 6, 7), there being disposed, adjacent to the at least one archable section (5, 6, 7), a receptable (33) for a functional element for setting the convexity of the archable section (5, 6, 7).

2. Seating element (1) according to claim 1,
**characterised in that**
the seating element (1) has a shape which is substantially adapted to the shape of a seated human being, in order to make available an ergonomic pressure-distribution.

3. Seating element (1) according to any one of the preceding claims,
**characterised in that**
the seating element (1) is produced from a plastic.

4. Seating element (1) according to any one of the preceding claims,
**characterised in that**
the seating element (1) extends, when in an installed condition, over substantially an entire region of the seat backrest and of the seating surface of the seat, and
that a backrest section (2) of the seating element (1) and a seating section (3) of the seating element (1) are connected by articulating means (4).

5. Seating element (1) according to claim 4,
**characterised in that**
the articulating means (4) include a film hinge.

6. Seating element (1) according to any one of the preceding claims,
**characterised in that**
the at least one archable section (5, 6, 7) is disposed in a seating region, a lumbar region, a chest region and /or a shoulder/neck region of the seating element (1).

7. Seating element (1) according to any one of the preceding claims,
**characterised in that**
the receptacle for the functional element (25, 26, 27) for arching the at least one archable section (5, 6, 7) includes a guide (33) for guiding the functional element (25, 26, 27) for arching the at least one archable section (6, 5, 7).

8. Seating element (1) according to claim 7,
**characterised in that**
the guide includes a wire (33) for guiding the functional element (25, 26, 27).

9. Seating element (1) according to any one of the preceding claims,
**characterised in that**
the seating element (1) includes at least one electrical line for supplying current and/or controlling functional elements that can be received in the receptacles.

10. Seating element (1) according to any one of the preceding claims,
**characterised in that**
the seating element (1) includes at least one air guide (22).

11. Seating element (1) according to claim 10,
**characterised in that**
the at least one air guide connects at least one of the receptacles (16, 17) for functional elements for aeration purposes (30) to at least one aerating opening (23, 24).

12. Seating element (1) according to claim 11,
**characterised in that**
the at least one aerating opening (23, 24) includes and aerating opening (23) on one side of the seating element (1).

13. Seating element (1) according to any one of claims 10 to 12,
**characterised in that**
the seating element (1) includes a passive pumping means which is coupled to the at least one air guide (22) and which is configured in such a way that it pumps air through the at least one air guide (22) in dependence upon a movement of an occupant on the seat.

14. Seating element (1) according to any one of the preceding claims,
**characterised in that**
the seating element (1) includes side bolsters (8-11).

15. Seating element (1) according to claim 14,
**characterised in that**
the receptacles include receptacles for functional elements for adjusting the side bolsters (8-11).

16. Seating element (1) according to any one of the preceding claims,
**characterised in that**
the seating element is provided with an upholstering layer.

17. Seating element (1) according to any one of the preceding claims,
**characterised in that** said seating element comprises movable sections (5, 6, 7) and removable elements for obstructing the movement of said movable sections (5, 6, 7).

18. Seating system for installation in a seat, including a seating element according to any one of claims 1 to 17, and a plurality of different functional elements (25-27, 30-32),
wherein functional elements which belong to the plurality of different functional elements and which are selected in dependence upon a predetermined level of equipment can be received in receptacles (12-21, 33) in the seating element (1).

19. Seating system according to claim 18,
**characterised in that**
the plurality of different functional elements include massaging elements (31), heating elements (32), ventilating elements (30), cooling elements, mechanical, electrical and/or pneumatic elements (25, 26, 27) for adjusting the convexity of an archable section (5, 6, 7) of the seating element, and/or elements for adjusting side bolsters (8, 9, 10, 11) of the seating element (1).

## Revendications

1. Élément de siège (1) à monter dans un siège, ledit élément de siège (1) étant dimensionné de telle sorte que, dans la position montée dans le siège, il s'étend sensiblement sur la totalité d'une zone d'un dossier du siège et/ou d'une surface d'assise du siège, et ledit élément de siège (1) comportant des logements (12-21, 33) destinés à recevoir des éléments fonctionnels (25, 26, 27, 30, 31, 32) pour la mise à disposition de fonctions supplémentaires du siège,
**caractérisé en ce que** ledit élément de siège (1) comporte une partie (5, 6, 7) courbable, sachant qu'à proximité de ladite au moins une partie (5, 6, 7) courbable est disposé un logement (33) pour un élément fonctionnel pour le réglage de la courbure de la partie (5, 6, 7) courbable.

2. Élément de siège (1) selon la revendication 1, **caractérisé en ce que** ledit élément de siège (1) possède une forme qui est ajustée sensiblement à la forme d'une personne assise, afin de proposer une répartition ergonomique de la pression.

3. Élément de siège (1) selon l'une des revendications précédentes, **caractérisé en ce que** ledit élément de siège (1) est réalisé en matière plastique.

4. Élément de siège (1) selon l'une quelconque des revendications précédentes, **caractérisé en ce que** ledit élément de siège (1), dans une position montée, s'étend sensiblement sur toute une zone du dossier et de la surface d'assise du siège, et **en ce qu'**une partie formant dossier (2) de l'élément de siège (1) et une partie formant assise (3) de l'élément de siège (1) sont assemblées l'une à l'autre par des moyens d'articulation (4).

5. Élément de siège (1) selon la revendication 4, **caractérisé en ce que** les moyens d'articulation (4) comportent une charnière flexible.

6. Élément de siège (1) selon l'une quelconque des revendications précédentes, **caractérisé en ce que** ladite au moins une partie (5, 6, 7) courbable est agencée dans une zone d'assise, une zone lombaire, une zone thoracique et/ou une zone pour épaules/nuque de l'élément de siège (1).

7. Élément de siège (1) selon l'une quelconque des revendications précédentes, **caractérisé en ce que** le logement pour l'élément fonctionnel (25, 26, 27) pour régler la courbure de ladite au moins une partie (5, 6, 7) courbable, comporte une glissière (33) pour le guidage de l'élément fonctionnel (25, 26, 27) destiné à courber ladite au moins une partie (5, 6, 7) courbable.

8. Élément de siège (1) selon la revendication 7, **caractérisé en ce que** la glissière comporte un fil (33) pour le guidage de l'élément fonctionnel (25, 26, 27).

9. Élément de siège (1) selon l'une quelconque des revendications précédentes, **caractérisé en ce que** ledit élément de siège (1) comporte au moins une ligne électrique pour l'alimentation électrique et/ou la commande des éléments fonctionnels insérables dans les logements.

10. Élément de siège (1) selon l'une quelconque des revendications précédentes, **caractérisé en ce que** ledit élément de siège (1) comporte au moins un conduit d'air (22).

11. Élément de siège (1) selon la revendication 10, **caractérisé en ce que** ledit au moins un conduit d'air fait communiquer au moins un des logements (16, 17) pour des éléments fonctionnels de ventilation (30) avec au moins une ouverture de ventilation (23, 24).

12. Élément de siège (1) selon la revendication 11, **caractérisé en ce que** ladite au moins une ouverture de ventilation (23, 24) comporte une ouverture de ventilation (23) sur un côté de l'élément de siège (1).

13. Élément de siège (1) selon l'une quelconque des revendications 10 à 12, **caractérisé en ce que** ledit élément de siège (1) comporte un moyen de pompage passif, qui est couplé audit au moins un conduit d'air (22) et qui est configuré de telle sorte que, en fonction d'un mouvement d'un occupant du siège, il pompe l'air à travers ledit au moins un conduit d'air (22).

14. Élément de siège (1) selon l'une quelconque des revendications précédentes, **caractérisé en ce que** ledit élément de siège (1) comporte des joues latérales (8-11).

15. Élément de siège (1) selon la revendication 14, **caractérisé en ce que** les logements contiennent des logements pour des éléments fonctionnels destinés au réglage des joues latérales (8-11).

16. Élément de siège (1) selon l'une quelconque des revendications précédentes, **caractérisé en ce que** ledit élément de siège est muni d'un habillage formant un capitonnage.

17. Élément de siège (1) selon l'une quelconque des revendications précédentes, **caractérisé en ce que** ledit élément de siège comporte des parties mobiles (5, 6, 7) et des éléments détachables pour bloquer le mouvement des parties mobiles (5, 6, 7).

18. Système de siège destiné à être monté dans un siège, comportant un élément de siège selon l'une des revendications 1 à 17, et une pluralité d'éléments fonctionnels (25-27, 30-32) différents, dans lequel des éléments fonctionnels, choisis en fonction d'un équipement prédéfini, parmi la pluralité d'éléments fonctionnels (25-27, 30-32) différents, sont logés dans des logements (12-21, 33) de l'élément de siège (1).

19. Système de siège selon la revendication 18, **caractérisé en ce que** la pluralité d'éléments fonctionnels différents englobe des éléments de massage (31), des éléments de chauffage (32), des éléments de ventilation (30), des éléments de refroidissement, des éléments (25, 26, 27) mécaniques, électriques et/ou pneumatiques pour le réglage de la courbure d'une partie (5, 6, 7) courbable de l'élément de siège et/ou des éléments pour le réglage des joues latérales (8, 9, 10, 11) de l'élément de siège (1).
